# FASCICULE DE BREVET EUROPEEN

(11) **EP 1 231 138 B1**
(45) Date de publication et mention de la délivrance du brevet: **07.12.2005**
(21) Numéro de dépôt: 02290284.5
(22) Date de dépôt: 06.02.2002
(51) Int. Cl.: B64D 27/26

(54) **Dispositif d'accrochage d'un moteur sur un aéronef**
Triebwerkaufhängungsvorrichtung an einem Luftfahrzeug
Device for locking an engine on an aircraft

(30) Priorité: 08.02.2001 FR 0101701
(43) Date de publication de la demande: 14.08.2002
(73) Titulaire: AIRBUS France, 31060 Toulouse (FR)
(72) Inventeur: Roszak, Sébastien, 31100 Toulouse (FR)
(74) Mandataire: Poulin, Gérard

(56) Documents cités:
- EP-A- 1 053 936
- FR-A- 2 770 486

## Description

### Domaine technique

L'invention concerne un dispositif d'accrochage d'un moteur d'aéronef sur un mât fixé à un élément de structure de l'aéronef, tel que la voilure ou le fuselage.

De façon plus précise, l'invention concerne un dispositif d'accrochage conçu pour transmettre à la structure de l'aéronef, au travers du mât, les efforts latéraux et verticaux supportés par le moteur (ces directions des efforts correspondent au cas où celui-ci est fixé sous la voilure), ainsi que le couple moteur.

### Etat de la technique

Les moteurs qui équipent les aéronefs sont suspendus sous la voilure ou accrochés latéralement sur le fuselage par l'intermédiaire d'un élément appelé "mât réacteur". Pour simplifier, cet élément est appelé "mât" dans l'ensemble du texte.

La liaison entre le moteur et le mât est généralement assurée par deux ou trois dispositifs d'accrochage complémentaires, qui remplissent des fonctions distinctes.

L'un de ces dispositifs d'accrochage a pour fonction de reprendre les efforts latéraux et verticaux engendrés par le moteur, ainsi que le couple moteur, afin de les retransmettre à la structure de l'aéronef par l'intermédiaire du mât. L'invention concerne précisément ce dispositif d'accrochage. Il est à noter qu'un tel dispositif peut être monté indifféremment à l'arrière ou à l'avant du moteur, les dimensions des pièces qui le constituent étant adaptées en conséquence.

Comme l'illustrent notamment les documents US-A-5 620 154 et US-A-5275 357, certains des dispositifs d'accrochage existants comportent une structure d'accrochage principale et une structure d'accrochage de secours. La structure d'accrochage principale assure la transmission des efforts lors du fonctionnement normal, c'est-à-dire lorsque toutes les pièces du dispositif d'accrochage sont intactes. La structure d'accrochage de secours est prévue pour assurer la continuité de la fonction de transmission des efforts entre le moteur et l'avion en cas de rupture de l'une des pièces de la structure d'accrochage principale. Elle permet ainsi de ne pas perdre le moteur.

Dans ces dispositifs d'accrochage existants, la structure d'accrochage principale comprend habituellement une ferrure fixée au mât, par exemple au moyen de vis, ainsi qu'au moins deux bielles rotulées assurant la liaison entre la ferrure et le moteur. Le montage rotulant des bielles sur la ferrure et sur le moteur permet d'éviter que le dispositif reprenne des efforts orientés selon l'axe longitudinal du moteur. Ce montage permet aussi de compenser la dilatation thermique du moteur et de préserver le caractère isostatique de la liaison entre le mât et le moteur.

Comme l'illustrent également les documents US-A-5 620 154 et US-A-5 275 357, lorsque les dispositifs d'accrochage existants comprennent des structures d'accrochage de secours, celles-ci incluent généralement des éléments additionnels, tels qu'une ou plusieurs bielles supplémentaires, interposés entre la ferrure et le moteur. Ces éléments additionnels présentent des jeux tels qu'ils ne reprennent normalement aucun effort lorsque les pièces de la structure d'accrochage principale sont intactes et, par conséquent, en état de remplir leurs fonctions.

Certains dispositifs d'accrochage existants, tels que ceux qui sont utilisés dans les programmes Airbus, comprennent une pièce intermédiaire interposée entre le mât et la ferrure. Cette pièce intermédiaire, de section trapézoïdale, présente une première surface plane prévue pour être fixée, par exemple au moyen de quatre vis, sur un plan d'attache incliné du mât et une deuxième surface plane horizontale servant à la fixation de la ferrure, par exemple au moyen de quatre autres vis. La pièce intermédiaire peut être monobloc ou constituée de deux demi-pièces assemblées entre elles par des vis. Sa présence contribue à rendre le dispositif d'accrochage compliqué, lourd et encombrant.

Dans les dispositifs d'accrochage existants, tels que ceux qui sont décrits dans les documents US-A-5 620 154 et US-A-5 275 357, les éléments additionnels qui forment la structure d'accrochage de secours sont toujours interposés entre la ferrure de la structure d'accrochage principale et le moteur. En d'autres termes, ces éléments additionnels permettent de conserver l'intégrité de l'accrochage du moteur lorsque la liaison entre la ferrure et le moteur est remise en cause. En revanche, ils ne permettent pas de conserver cette intégrité lorsque la défaillance concerne la liaison entre le mât et la ferrure, c'est-à-dire par exemple les vis de fixation ou la pièce intermédiaire entre le mât et la ferrure, lorsque cette pièce existe.

Une solution pour assurer l'intégrité de la liaison entre le mât et la ferrure consiste à surdimensionner les vis de fixation interposées entre le mât et la pièce intermédiaire ainsi qu'entre ladite pièce et la ferrure. En cas de défaillance de l'une des vis ou de l'une des demi-pièces formant la pièce intermédiaire, les vis valides sont alors dimensionnées pour transmettre les efforts. Toutefois, cette solution nécessite l'utilisation d'outils de serrage spéciaux et non standards qui doivent être embarqués dans l'avion, ce qui ajoute un surplus de poids indésirable.

Par ailleurs, le document FR-A-2 770 486 décrit un dispositif d'accrochage d'un moteur sur un mât d'aéronef, conçu pour préserver l'intégrité de l'accrochage du moteur même en cas de défaillance de la ferrure de la structure d'accrochage principale. Ce dispositif d'accrochage comprend une structure d'accrochage principale de type connu ainsi qu'une structure d'accrochage de secours apte à relier directement le mât au moteur sans passer par la ferrure, en cas de défaillance de celle-ci. La transmission des efforts entre le moteur et l'aéronef continue alors à être assurée. De plus, la solution décrite dans ce document permet de s'affranchir de la présence de la pièce intermédiaire, assurant ainsi la sécurité totale du dispositif d'accrochage.

### Exposé de l'invention

L'invention a précisément pour objet un dispositif d'accrochage d'un moteur sur un mât d'un aéronef, conçu pour préserver l'intégrité de l'accrochage du moteur même en cas de défaillance d'une demi ferrure de la structure d'accrochage principale ou des moyens de fixation de la demi ferrure sur le mât, tout en permettant de s'affranchir de la présence de la pièce intermédiaire.

Conformément à l'invention, ce résultat est obtenu grâce à un dispositif d'accrochage selon la revendication 1.

Du fait que la structure d'accrochage de secours relie le mât au moteur par l'intermédiaire de la demi ferrure valide, l'intégrité totale de la liaison entre le mât et le moteur est préservée même en cas de rupture d'une demi ferrure ou des moyens de fixation qui lui sont associés, la transmission des efforts entre le moteur et l'aéronef continue alors à être assurée et la perte du moteur est évitée, quelle que soit l'origine de la rupture (criques, oxydation, défaut du matériau, etc.).

Par ailleurs, l'intégrité de la liaison entre la ferrure et le moteur peut être assurée par l'un quelconque des moyens utilisés dans les structures d'accrochage de secours existantes.

Avantageusement, la broche est fixée à une chape femelle apte à être elle-même fixée au mât, et le trou traverse des parties des deux demi ferrures reçues dans ladite chape.

Dans ce cas, la chape femelle est, de préférence, fixée au mât par soudage.

De façon plus précise, chacune des demi ferrures est alors apte à être fixée, par lesdits moyens de fixation, sur une surface du mât tournée vers le moteur et la chape femelle fait saillie vers le moteur à partir de ladite surface.

### Brève description des dessins

On décrira à présent, à titre d'exemple non limitatif, un mode de réalisation préféré de l'invention, en se référant aux dessins annexés, dans lesquels :
- la figure 1 est une vue en perspective qui représente schématiquement un mode de réalisation préféré d'un dispositif d'accrochage conforme à l'invention ;
- la figure 2 est une vue en perspective élargie du dispositif d'accrochage de la figure 1, sur laquelle l'une des demi ferrures est volontairement omise pour montrer la structure d'accrochage de secours ;
- la figure 3 est une vue en coupe schématique du dispositif d'accrochage des figures 1 et 2, selon un plan passant par l'axe longitudinal du moteur, illustrant la transmission des efforts en fonctionnement normal ; et
- la figure 4 est une vue en coupe comparable à la figure 3, illustrant la transmission des efforts en cas de défaillance de la demi ferrure de gauche ou de ses moyens de fixation sur le mât.

### Description détaillée d'un mode de réalisation préféré de l'invention

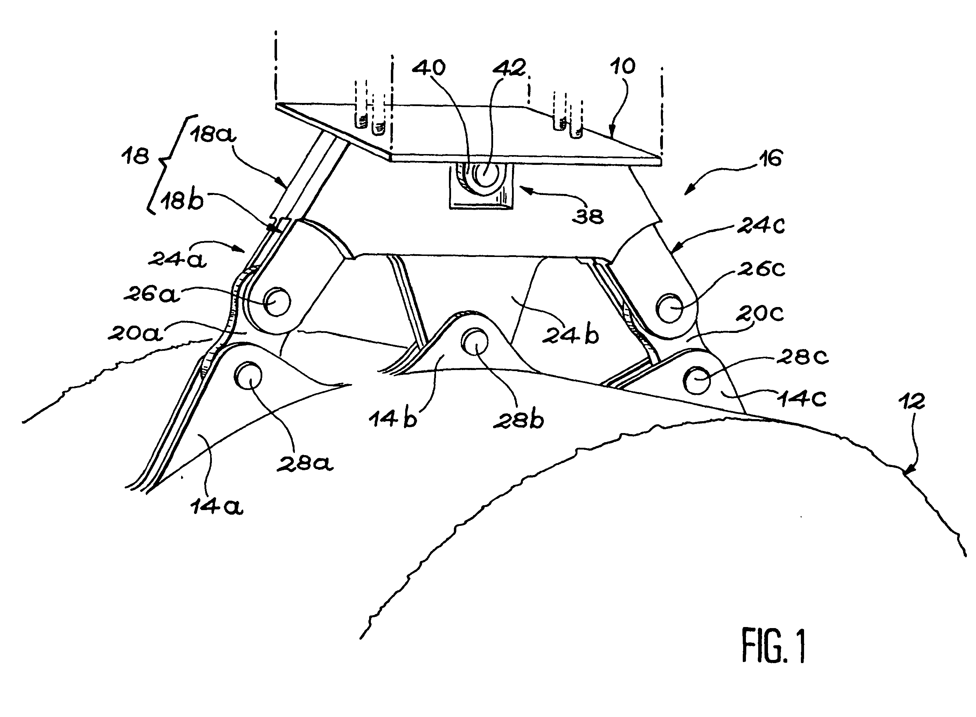

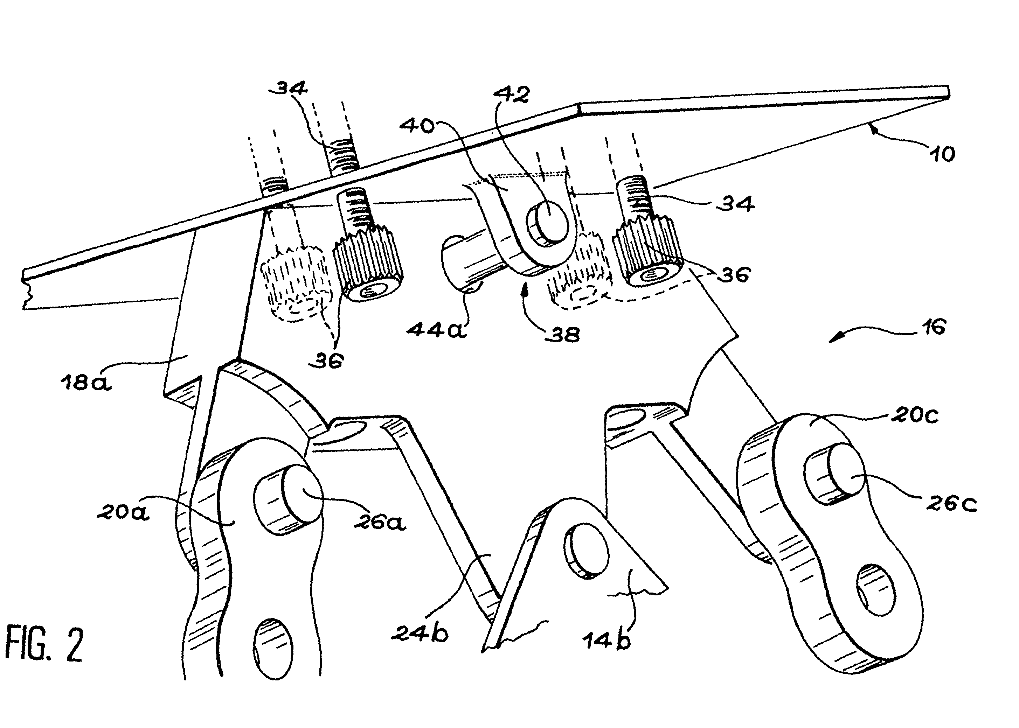

Sur les figures 1 et 2, la référence 10 désigne un mât prévu pour être fixé, de façon connue, à un élément de structure d'un aéronef, tel que la voilure ou le fuselage. Plus précisément, la référence 10 correspond à une partie du mât conçue pour reprendre les efforts latéraux et verticaux engendrés par un moteur, ainsi que le couple moteur, afin qu'ils soient retransmis à la structure de l'aéronef par l'intermédiaire du mât 10.

Par ailleurs, la référence 12 désigne une partie de la structure du moteur, prévue pour être fixée sur le mât 10. Des pièces telles que des chapes femelles 14a, 14b et 14c font partie intégrante de la structure 12 ou sont prévues pour être fixées sur celle-ci selon des techniques connues de l'homme du métier, qui ne font pas partie de l'invention.

Plusieurs dispositifs d'accrochage sont interposés entre le mât 10 et le moteur, de façon à assurer l'accrochage de celui-ci à la structure de l'avion. Seul l'un de ces dispositifs d'accrochage est représenté sur les figures. Ce dispositif est désigné de façon générale par la référence 16. Il relie le mât 10 aux chapes 14a, 14b et 14c du moteur.

Le dispositif d'accrochage 16 est réalisé conformément à l'invention. Il a pour fonction de reprendre les efforts latéraux et verticaux supportés par le moteur, ainsi que le couple moteur, pour les retransmettre à la structure de l'aéronef au travers du mât 10. Les autres efforts sont transmis par d'autres dispositifs d'accrochage (non représentés) qui peuvent être réalisés selon différentes techniques connues de l'homme du métier et ne font pas partie de l'invention.

Comme on l'a déjà observé, le dispositif d'accrochage 16 et, par conséquent, les chapes 14a, 14b et 14c peuvent être placés indifféremment à l'avant ou à l'arrière du moteur.

Le dispositif d'accrochage 16 conforme à l'invention comprend une structure d'accrochage principale, qui assure la transmission de tous les efforts précités lorsque les différentes pièces qui la constituent ne sont pas endommagées. Le dispositif d'accrochage 16 comprend aussi une structure d'accrochage de secours, destinée à suppléer la structure d'accrochage principale lorsque l'un quelconque des éléments assurant normalement la liaison entre le mât 10 et la ferrure du dispositif d'accrochage principal est défaillant.

Dans le mode de réalisation préféré de l'invention illustré sur les figures, la structure d'accrochage principale comprend une ferrure 18, deux bielles latérales simples 20a et 20c, ainsi que des moyens de fixation de la ferrure 18 sur le mât 10.

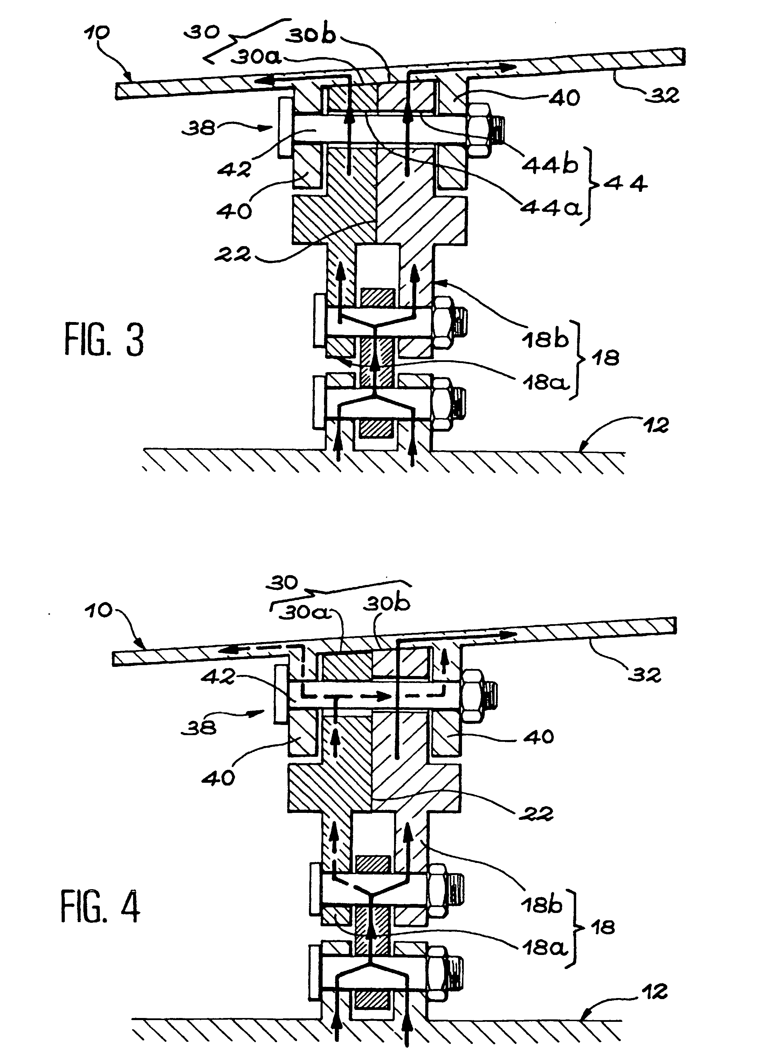

De façon plus précise, la ferrure 18 est formée de deux demi ferrures 18a et 18b assemblées l'une à l'autre, de manière connue, par exemple par des vis non représentées sur les figures. Lorsque les deux demi ferrures sont assemblées, elles sont en contact mutuel par une interface 22 (figures 3 et 4) matérialisant un plan de symétrie de la ferrure 18.

La ferrure 18 comprend deux chapes femelles 24a et 24c dont les flancs sont formés dans chacune des demi ferrures 18a et 18b. Ces deux chapes femelles 24a et 24c sont reliées respectivement aux bielles 20a et 20c par deux tourillons rotulés 26a et 26c. Deux tourillons rotulés 28a et 28c relient également les bielles 20a et 20c aux chapes femelles 14a et 14c les plus éloignées portées par la structure 12 du moteur.

Entre les chapes femelles 24a et 24c, la ferrure 18 comprend aussi une chape mâle 24b, formée pour moitié dans la demi ferrure 18a et pour moitié dans la demi ferrure 18b. La chape mâle 24b est traversée avec jeu par une broche 28b fixée sur la chape femelle 14b portée par la structure 12 du moteur, entre les chapes femelles 14a et 14c. La liaison avec jeu ainsi réalisée entre la ferrure 18 et le moteur forme une première structure d'assemblage de secours, apte à relier ces deux pièces en cas de défaillance de l'une des bielles 20a et 20c ou de l'un des tourillons rotulés qui relient ces bielles à la ferrure 18 et aux chapes 14a et 14c.

Il est à noter que l'agencement qui vient d'être décrit ne constitue qu'un mode de réalisation possible de la liaison entre la ferrure 18 et la structure 12 du moteur. Cet agencement peut être remplacé par tout agencement mécaniquement équivalent, remplissant les mêmes fonctions sous des formes différentes, sans sortir du cadre de l'invention.

A l'opposé des chapes femelles 24a et 24c et de la chape mâle 24b, la ferrure 18 comporte une face plane 30, prévue pour être appliquée contre une face plane 32 du mât 10. Plus précisément, la face plane 30 de la ferrure 18 est formée pour moitié (référence 30a) sur la demi ferrure 18a et pour moitié (référence 30b) sur la demi ferrure 18b, de part et d'autre de leur interface 22.

Lorsque le moteur est accroché sous la voilure de l'aéronef, la face plane 32 du mât 10 est tournée vers le bas et vers l'avant, comme l'illustrent en particulier les figures 3 et 4. Pour tenir compte de cette inclinaison et assurer une orientation verticale de l'interface 22 sans adjonction de pièce intermédiaire, l'interface entre la ferrure 18 et le mât 10 doit être adaptée. Ceci peut être fait en ménageant des bossages (non représentés) sur l'une ou l'autre des faces 30 et 32, respectivement de la ferrure 18 et du mât 10.

La fixation des deux demi ferrures 18a et 18b sur le mât 10 est assurée par des moyens de fixation appropriés, illustrés sur la figure 2. Ces moyens de fixation comprennent par exemple, pour chacune des demi ferrures, deux vis 34 et deux écrous 36.

Plus précisément, les écrous 36 sont noyés et immobilisés en rotation dans les demi ferrures 18a et 18b de telle sorte que leurs axes soient orientés parallèlement à l'interface 22 et perpendiculairement à l'interface entre la ferrure 18 et le mât 10. Les vis 34 traversent des trous en vis-à-vis usinés dans le mât et dans les demi ferrures, selon les axes des écrous 36. Leurs têtes prennent appui contre des surfaces d'appui prévues sur le mât, à l'opposé de la face plane 32. Ainsi, le serrage des vis 34 dans les écrous 36 a pour effet de plaquer les faces planes 30a et 30b des demi ferrures 18a et 18b contre la face plane 32 du mât 10.

Conformément à l'invention, cet agencement est complété par une deuxième structure d'accrochage de secours 38, interposée entre le mât 10 et la ferrure 18.

Dans le mode de réalisation préféré de l'invention représenté sur les figures, la structure d'accrochage de secours 38 comprend une chape femelle 40. Les deux flancs de la chape 40 font saillie sur la face plane 32 du mât 10, de part et d'autre de la ferrure 18 ou dans des évidements respectifs prévus dans chacune des demi ferrures 18a et 18b. La chape femelle 40 est fixée au mât 10 par tout moyen approprié tel que, par exemple, par soudage.

La structure d'accrochage de secours 38 comprend de plus une broche 42 qui est fixée aux flancs de la chape femelle 40, à une certaine distance de la face plane 32. La fixation de la broche 42 sur la chape 40 peut notamment être réalisée en la dotant d'un épaulement à une extrémité et d'un filetage sur lequel est vissé un écrou à son extrémité opposée (figures 3 et 4). Tout autre mode de fixation ou d'immobilisation par rapport à la chape 40 peut toutefois être utilisé, sans sortir du cadre de l'invention. En outre, l'axe de la broche 42 est orienté selon une direction sensiblement parallèle à l'axe longitudinal du moteur.

La broche 42 traverse un trou 44, de section circulaire, usiné dans la ferrure 18. Le trou 44 se décompose en deux parties 44a et 44b formées respectivement dans chacune des demi ferrures 18a et 18b, de part et d'autre de l'interface 22.

La section du trou 44 est sensiblement supérieure à celle de la broche 42, de telle sorte qu'il existe entre eux un jeu suffisant pour que la broche 42 ne soit pas en contact avec les demi ferrures 18a et 18b en fonctionnement normal, c'est-à-dire lorsque toutes les pièces de la structure d'accrochage principale sont intactes. De plus, il existe également entre les flancs de la chape femelle 40 et la ferrure 18 un jeu axial suffisant pour que la chape ne soit pas en contact avec les demi ferrures 18a et 18b en fonctionnement normal. Ces jeux tiennent compte de la dilatation et des mouvements du moteur par rapport aux différents organes de fixation.

Dans l'agencement qui vient d'être décrit, les différentes pièces formant la structure d'accrochage de secours 38 ne transmettent aucun effort en fonctionnement normal, c'est-à-dire lorsque les différentes pièces qui constituent la structure d'accrochage principale ne sont pas endommagées. Comme l'illustrent les flèches sur la figure 3, les efforts latéraux et verticaux, ainsi que le couple moteur, sont alors transmis du moteur au mât 10 en passant par les tourillons rotulés 28a, 28c, les bielles 20a, 20c, les tourillons rotulés 26a, 26c, les demi ferrures 18a, 18b et les ensembles vis 34, écrous 36 (non représentés sur les figures 3 et 4).

Comme l'illustre la figure 4, en cas de rupture de l'une des demi ferrures (la demi ferrure 18a sur la figure 4) ou de l'une au moins des vis 34 servant à fixer cette demi ferrure sur le mât 10, les efforts en provenance du moteur sont transmis au mât en partie au travers de l'autre demi ferrure (la demi ferrure 18b sur la figure 4) et des vis 34 qui la relient au mât 10 (flèches en trait plein sur la figure 4), et en partie au travers de la demi ferrure défaillante, de la broche 42 et de la chape femelle 40, après rattrapage du jeu séparant initialement ces deux dernières pièces (flèches en traits tiretés sur la figure 4).

Ainsi, l'objectif consistant à préserver l'intégrité de l'accrochage du moteur, même en cas de défaillance de l'une des demi ferrures 18a, 18b ou des moyens de fixation de celle-ci sur le mât, est atteint, en s'affranchissant de la pièce intermédiaire généralement placée entre le mât et la ferrure.

Bien entendu, l'invention n'est pas limitée au mode de réalisation qui vient d'être décrit. Ainsi, les moyens de fixation par lesquels chacune des demi ferrures est montée sur le mât peuvent être différents des ensembles vis écrou décrits. Il en est de même pour la structure d'accrochage de secours, qui peut être agencée différemment, la broche pouvant par exemple être liée à la ferrure et traverser avec jeu un trou usiné dans le mât.

## Revendications

1. Dispositif d'accrochage d'un moteur sur un mât (10) d'aéronef, le dispositif comprenant une structure d'accrochage principale (20a, 20c, 18, 34, 36), apte à transmettre des efforts entre le moteur et le mât en fonctionnement normal, et une structure d'accrochage de secours (38), apte à ne transmettre aucun effort en fonctionnement normal, la structure d'accrochage principale comportant une ferrure (18) incluant deux demi ferrures (18a, 18c), des moyens de fixation (34,36) aptes à fixer séparément au mât (10) chacune des demi ferrures et au moins deux bielles rotulées (20a, 20c), aptes à relier la ferrure au moteur, **caractérisé en ce que** la structure d'accrochage de secours (38) comprend une broche (42) d'axe sensiblement parallèle à un axe longitudinal du moteur, ladite broche étant fixée à l'une des pièces constituées par la ferrure (18) et le mât (10) et traversant avec jeu un trou (44) formé dans l'autre pièce, en fonctionnement normal, de telle sorte que, en cas de défaillance de l'une des demi ferrures (18a, 18c) ou des moyens de fixation (34, 36) de celle-ci sur le mât, la structure d'accrochage de secours (38) assure la transmission desdits efforts au travers de l'autre demi ferrure.

2. Dispositif selon la revendication 1, dans lequel la broche (42) est fixée à une chape femelle (40) apte à être fixée au mât (10), et le trou (44) traverse des parties des deux demi ferrures (18a, 18b) reçues dans ladite chape.

3. Dispositif selon la revendication 2, dans lequel la chape femelle (40) est soudée au mât (10).

4. Dispositif selon l'une quelconque des revendications 2 et 3, dans lequel chacune des demi ferrures (18a, 18b) est apte à être fixée, par lesdits moyens de fixation (34, 36), sur une surface (32) du mât (10) tournée vers le moteur et la chape femelle (40) fait saillie vers le moteur à partir de ladite surface.

## Patentansprüche

1. Triebwerkaufhängungsvorrichtung an einer Strebe (10) eines Luftfahrzeugs, wobei die Vorrichtung eine Hauptaufhängungsstruktur (20a,20c,18,34,36), die bei normaler Funktion die Kräfte zwischen dem Motor und der Strebe übertragen kann und eine Hilfsaufhängungsstruktur (38), die bei normaler Funktion keine Kraft übertragen kann, aufweist, wobei die Hauptaufhängungsstruktur umfasst: einen Beschlag (18), enthaltend 2 Halbbeschläge (18a,18c), Befestigungsmittel (34,36) die jeden der Halbbeschläge, getrennt an der Strebe (10) befestigen können, und mindestens zwei Kugelgelenkkupplungsglieder (20a,20c), welche den Beschlag mit dem Motor verbinden können, **dadurch gekennzeichnet, dass** die Hilfsaufhängungsstruktur (38) einen Zapfen bzw. Stift (42) umfasst, dessen Achse im wesentlichen parallel zu einer longitudinalen Achse des Motors ist, wobei der Zapfen bzw. Stift bei normaler Funktion an einem der durch den Beschlag (18) und die Strebe (10) aufgebauten Teile befestigt ist und mit Spiel durch ein Loch (44), das im anderen Teil gebildet ist, derart hindurchtritt, dass im Falle des Ausfalls eines der Halbbeschläge (18a,18c) oder deren Befestigungsmittel (34,36) an der Strebe, die Hilfsaufhängungsstruktur (38) die Übertragung der Kräfte durch den anderen Halbbeschlag absichert.

2. Triebwerkaufhängungsvorrichtung nach Anspruch 1, worin der Zapfen bzw. Stift (42) an einer Hilfsabdeckung (40) befestigt ist, die an der Strebe (10) befestigt werden kann und das Loch (44) die Teile der zwei Halbbeschläge (18a,18b), die in die Abdeckung aufgenommen sind, durchsetzt.

3. Vorrichtung nach Anspruch 2, worin die Hilfsabdeckung (40) an der Strebe (10) angeschweißt ist.

4. Vorrichtung nach irgendeinem der Ansprüche 2 und 3, worin jeder der Halbbeschläge (18a, 18b) durch die Befestigungsmittel (34,36) auf einer Oberfläche (32) der Strebe (10), die sich in Richtung des Motors dreht, befestigt werden kann, und die Hilfsabdeckung (40) in Richtung des Motors von der Oberfläche hervor ragt.

## Claims

1. Device for attachment of an engine to an aircraft nacelle stub (10), the device comprising a main attachment structure (20a, 20c, 18, 34, 36) capable of transmitting forces between the engine and the nacelle stub during normal operation, and an emergency attachment structure (38) that does not transmit any force during normal operation, the main attachment structure comprising a fitting (18) including two half-fittings (18a, 18c), attachment means (34, 36) that fix each of the two half-fittings to the nacelle stub (10) separately, and at least two swivel ended connecting rods (20a, 20c) that can connect the fitting to the engine, **characterized in that** the emergency attachment structure (38) comprises a hinge pin (42) with an axis approximately parallel to a longitudinal axis of the engine, the said hinge pin being fixed to one of the parts composed of the fitting (18) and the nacelle stub (10) and passing through a hole (44) formed in the other part with a clearance, during normal operation, so that the emergency attachment structure (38) is laid out so that it would transmit the said forces through the other half-fitting if one of the half-fittings (18a, 18c) fails or if the means (34, 36) of fastening the half-fitting onto the nacelle stub fails.

2. Device according to claim 1, in which the hinge pin (42) is fixed to a double hinge fitting (40) that can be fixed to the nacelle stub (10), and the hole (44) passes through the parts of the two half-fittings (18a, 18c) that fit into the said hinge fitting.

3. Device according to claim 2, in which the double hinge fitting (40) is welded to the nacelle stub (10).

4. Device according to either of claims 2 and 3, in which each of the half-fittings (18a, 18c) can be fixed by the said attachment means (34, 36) to a surface (32) of the nacelle stub (10) facing the engine and the double hinge fitting (40) projects from the said surface towards the engine.
